# EUROPÄISCHE PATENTSCHRIFT

(11) **EP 1 691 094 B1**
(45) Veröffentlichungstag und Bekanntmachung des Hinweises auf die Patenterteilung: **08.10.2008**
(21) Anmeldenummer: 05100983.5
(22) Anmeldetag: 11.02.2005
(51) Int. Cl.: F16D 3/28

(54) **Axiale Isolierung für ein kardanisches Kreuzgelenk**
Axial insulation for a crosspiece of a universal joint
Isolement axial pour un croissillon d'un joint universel

(43) Veröffentlichungstag der Anmeldung: 16.08.2006
(73) Patentinhaber: Ford Global Technologies, LLC, Dearborn, MI 48126 (US)
(72) Erfinder: Gross, Norbert, D- 40221 Düsseldorf (DE)
(74) Vertreter: Drömer, Hans-Carsten

(56) Entgegenhaltungen:
- EP-B- 0 563 940
- WO-A-01/51823
- US-A- 1 702 363
- US-A- 4 121 437
- US-A- 5 551 919

## Beschreibung

Die Erfindung betrifft ein Kardangelenk, das zwei Gelenkgabeln aufweist, wobei eine der Gelenkgabeln mit einer angetriebenen Welle bzw. Antriebswelle und die andere Gelenkgabel mit einer anzutreibenden Welle bzw. Abtriebswelle verbindbar bzw. verbunden ist, und wobei die beiden Gelenkgabeln um 90° radial verdreht zueinander angeordnet sind, so daß die beiden Gelenkgabeln einen Innenraum bilden, wobei dem Kardangelenk ein elastisches Kupplungselement zugeordnet ist.

Kardangelenke werden üblicherweise verwendet, wenn zwei drehmomentübertragende Wellen, deren fluchtende Ausrichtung nicht immer gewährleistet ist, miteinander verbunden werden sollen. Das Kardangelenk besteht dabei üblicherweise aus zwei einander gegenüberliegenden, um 90° gegeneinander versetzten Gelenkgabeln, die jeweils ein Ende der zwei gelenkig miteinander zu verbindenden Wellen darstellen. Zwischen den Gelenkgabeln ist ein Gelenkkreuz angeordnet, das aus zwei um 90° gegeneinander versetzten Zapfenträgern besteht, wobei das Gelenkkreuz einstückig hergestellt ist, so daß die beiden Zapfenträger starr miteinander verbunden sind. Die Zapfenträger sind dabei jeweils in den beiden Gelenkgabeln um ihre Achse drehbar gelagert.

Bei der Übertragung von Antriebskräften, ist der Fachmann regelmäßig vor die Aufgabe gestellt, zwar die Drehbewegung zu übertragen, Schwingungen und Stöße aber bei der Übertragung möglichst zu eliminieren. Derartige Störungen können beispielsweise durch Schwingungen von der Antriebseinheit hervorgerufen werden. Dieses Problem macht sich besonders im Automobilbau, insbesondere im Bereich des Antriebsstrangs, beispielsweise im Bereich der Kardanwelle, wo die Schwingungen zwischen Antriebsaggregat und Hinterachse ungehindert übertragen werden, und im Bereich des Lenkungsstranges bzw. in der Lenksäule, wo bei Verwendung herkömmlicher Kardangelenke keinerlei Isolierung gegen durch Fahrbahnunebenheiten aufgezwungene niederfrequente Schwingungen bzw. Stöße erfolgt, bemerkbar. Derartige Störungen können einerseits zu Schädigungen im Antriebsstrang bzw. der Lenksäule und/oder zu akustischen oder mechanischen Beeinträchtigungen beim Fahrer führen.

Zum Zwecke akustischer oder schwingungsdynamischer Abkopplung, insbesondere in der Lenksäule ist es beispielsweise bekannt eine torsionselastische Kupplung mit einer so genannten Hardy-Scheibe, als axial elastisches Kupplungselement oder einer Schlingenscheibe zu verwenden. Die Hardy-Scheibe wird beispielsweise in der Lenksäule zwischen dem unteren Kardangelenk und einem Lenkgehäuse bzw. Lenkgetriebe oder zwischen den Kardangelenken angeordnet. Die in Drehrichtung steife Hardy-Scheibe ist derart ausgestaltet, daß diese in axialer Richtung der Lenksäule weich ist. Prinzipbedingt ist die Biegesteifigkeit der Hardyscheibe relativ gering. Dies bewirkt eine Verzerrung der Hardy-Scheibe mit den Biegemomenten aus dem Kardangelenk, falls die Hardy-Scheibe wie üblich in Serie mit dem Kardangelenk angeordnet ist. Da eine Hardy-Scheibe allein (ohne Kardangelenk) zumindest bei entsprechenden Standzeiten nicht geeignet ist, nicht fluchtende Wellen zu verbinden, wird nachteilig die Anzahl der Bauteile mit der notwendigen Serienanordnung mit dem Kardangelenk erhöht. Darüber hinaus ist der axiale Bauraum dadurch erhöht, und die übliche Kompensation der Ungleichförmigkeiten mit zwei gegenphasig angeordneten kardanischen Gelenken wird durch die zusätzliche Hardy-Scheibe gestört, da sie in Serie placiert wie ein zusätzliches Gelenk wirkt.

Die EP 0 563 940 B1 betrifft ein Kreuzgelenk mit zwei einander gegenüberliegenden, um 90° gegeneinander versetzten Gabeln, die jeweils Bestandteil je einer von zwei gelenkig miteinander zu verbindenden Wellen sind, oder die jeweils mit je einem von zwei gelenkig miteinander zu verbindenden Wellenenden verbindbar sind. Das Kreuzgelenk weist zwei um 90° gegeneinander versetzte, ein Zapfenkreuz bildende Zapfenpaare auf, die in den jeweiligen Gabelenden um ihre Achse drehbar und, bezogen auf die Drehachse der Wellen, drehmomentübertragend gelagert sind. Die beiden Zapfenpaare sind in der durch das Zapfenkreuz gebildeten Ebene zumindest geringfügig gegeneinander verschwenkbar, wobei jeder Zapfen in einem Ankerbock gelagert ist. Einander benachbarte Ankerböcke sind durch ein elastisches Kupplungselement miteinander verbunden. Das elastische Kupplungselement enthält ortsfest angeordnete, schlingenförmige Verstärkungseinlagen, die jeweils zwei benachbarte Ankerböcke miteinander verbinden. Die schlingenförmigen Verstärkungseinlagen liegen entlang dem Umfang des Kreuzgelenkes in einer Schlingenebene, die senkrecht zur Ebene des Zapfenkreuzes ist.

Als ein Hauptnachteil des in der EP 0 563 940 B1 offenbarten Kreuzgelenkes ist anzusehen, daß die beiden Zapfenpaare unterschiedlich die eigenen Zapfen schlüssig miteinander verbindet: Das eine Paar verwendet einen durchgängigen Bolzen, das andere Paar ist konfiguriert aus zwei kurzen Zapfen, die durch ein zusätzliches Verbindungsstück miteinander verbunden werden. Hierdurch wird zur Herstellung eines jeden Zapfens bzw. Zapfenpaares ein unterschiedliches Herstellungswerkzeug benötigt, wodurch die Herstellung des Kreuzgelenkes äußerst kostenintensiv ist. Das erforderliche Verbindungsstück beschränkt zudem die axiale & radiale Freigängigkeit des Gelenks. Außerdem ist der axiale Bauraumbedarf optimierbar.

Nachteilig ist weiterhin, daß das in der EP 0 563 940 B1 offenbarte Kreuzgelenk in seiner Konstruktion sehr aufwendig und damit sehr störanfällig ist. Als Nachteil ist weiter anzusehen, daß die Gabeln in der Weite klein und deren Gabellager somit größer (teurer) ausgeführt werden müssen, um bei sinnvollen Baugrößen ein hinreichendes Drehmoment zu übertragen. Wird bei dem Kreuzgelenk der EP 0 563 940 B1 der flexible Ring beschädigt, muß ein Ersatzring radial über die Anker zugeführt werden. Darüber hinaus ist das Kreuzgelenk gerade bei schnell drehenden Wellen schwierig auszuwuchten.

In der US 4,850,933 ist eine flexible Verbindung zur Verbindung einer angetriebenen Welle mit einer anzutreibenden Welle offenbart. Die Verbindung umfaßt:
eine flexible Zentralscheibe, die eine winklige Ausrichtung ermöglicht,
eine Mehrzahl tragender Blattfedern, die eine parallele Ausrichtung ermöglichen, wobei die Blattfedern jeweils erste und zweite Enden aufweisen,
eine Antriebsplatte und eine angetriebene Platte,
ein erstes paar L-förmige Haltenasen, die mit gegenüberliegenden Seiten der angetriebenen Platte und mit dem ersten Ende des ersten Paares der Blattfedern verbunden sind,
ein zweites paar L-förmige Haltenasen, die mit gegenüberliegenden Seiten der anzutreibenden Platte und mit dem ersten Ende des zweiten Paares der Blattfedern verbunden sind,
Mitteln, die mit dem ersten Paar L-förmige Haltenasen verbunden, aber getrennt davon sind, zur Verbindung der zweiten Enden des ersten Paares der Blattfedern mit gegenüberliegenden Enden der flexiblen Zentralscheibe,
Mitteln, die mit dem ersten Paar L-förmige Haltenasen verbunden, aber getrennt davon sind, zur Verbindung der zweiten Enden des zweiten Paares der Blattfedern mit gegenüberliegenden Enden der flexiblen Zentralscheibe,
eine erste Verbindungsnabe, die mit der angetriebenen Platte verbunden ist, um die angetriebene Platte mit der Antriebswelle zu verbinden,
eine zweite Verbindungsnabe, die mit der anzutreibenden Platte verbunden ist, um die anzutreibenden Platte mit der anzutreibenden Welle zu verbinden.

Die EP 0 160 599 beschreibt eine elastische Kupplungseinheit mit einem ersten und einem zweiten Gabelgelenk zur Befestigung an jeweils einem treibenden Element und einem getriebenen Element. Die Gabelgelenke weisen derart angeordnete Schenkel auf, daß die Schenkel des ersten Gabelgelenks und des zweiten Gabelgelenks ineinander geschachtelt sind. An jedem Gabelgelenk ist eine Zierblende befestigt, wobei die Flächen dieser zwei Zierblenden nahezu senkrecht zur Drehachse der Einheit angeordnet sind, daß ein Verbindungselement aus Elastomer an diesen Zierblendenflächen befestigt ist. Jede Zierblende ist an dem jeweiligen Gabelgelenk mittels eines in mindestens eine Öffnung der Zierblende und in den Schenkeln des Gabelgelenks ausgesparte Ausnehmungen eingeführten Bolzens befestigt.

Die GB 942,495 offenbart eine Verbindung für Wellen. Die Verbindung weist eine flexible Scheibe mit Kupplungselemente auf, die jeweils an einer Seite der Scheibe angeordnet sind. Jedem Kupplungselement ist eine zu verbindende Welle zugeordnet. Die Kupplungselemente sind in einem rechten Winkel um die Scheibe gedreht, und liegen normal zur Scheibenachse. Während des Betriebes der Verbindung, kann eine winklige Ausrichtung der verbundenen Wellen angepaßt werden, in dem die Kupplungselemente gedreht werden, ohne das die Scheibe gebogen wird. Die Scheibe besteht ganz oder teilweise aus Plastik, Gummi oder ähnlichen elastischen Material, so daß dieses während der Verbindung biegefrei ist.

Als ein Hauptnachteil der in der GB 942,495 offenbarten Verbindung für Wellen ist anzusehen, daß die Kupplungselemente mit Spiel zur Scheibe und mit signifikanter Reibung gedreht werden, wobei das Verdrehspiel und die Reibung lediglich geringen Ansprüchen genügt.

Die US 5 551 919 offenbart ein Kardangelenk gemäß dem Oberbegriff des Anspruchs 1.

Der Erfindung liegt die Aufgabe zugrunde, ein Kardangelenk der eingangs genannten Art mit einfachen Mitteln dahingehend zu verbessern, so daß dieses unter wirtschaftlichen Aspekten günstiger herstellbar ist, ohne daß das elastische Kupplungselement signifikante Biegemomente durchleiten muß.

Diese Aufgabe wird durch die Merkmale des Anspruchs 1 gelöst.

Durch die identische Ausgestaltung der beiden Halteelemente können die jeweiligen Haltelemente in einem einzigen Herstellungswerkzeug hergestellt bzw. bearbeitet werden. Damit wird ein Kardangelenk zur Verfügung gestellt, welches in der Herstellung aus wirtschaftlichen Gründen eindeutig günstiger herzustellen ist, denn die jeweiligen Halteelemente können mit lediglich einem einzigen Herstellungswerkzeug hergestellt bzw. bearbeitet werden, wodurch gleichzeitig Logistik- und Lagerhaltungskosten reduziert werden können, da eine getrennte Lagerung bzw. zur Verfügungsstellung beispielsweise just in time unterschiedlicher Halteelemente entfallen kann.

Das erfindungsgemäße Kardangelenk eignet sich insbesondere zum Einsatz in einer Lenksäule eines Kraftfahrzeuges, wobei gegenüber einem herkömmlichen Kardangelenk axiale Stöße herausfiltbar sind. Dieses Verhalten ist besonders wünschenswert in Lenksäulenkonstruktionen, da axiale Stöße z. B. durch Straßenanregungen so von einem Lenkrad abgehalten werden können, ohne daß Einbußen hinsichtlich einer Drehsteifigkeit in Kauf genommen werden müssen. Durch die Integration der Elastizität durch das zweifach drehbar gelagerte elastische Kupplungselement in das Kardangelenk oder um dieses herum wird vermieden, daß neben einer axialen Nachgiebigkeit auch eine Biegesteifigkeit bereitgestellt werden muß. Mittels des erfindungsgemäßen Kardangelenkes kann die axiale Nachgiebigkeit größer ausgeführt werden, so daß auch Isolationseigenschaften gegenüber herkömmlichen elastischen Kupplungen in Lenksäulenkonstruktionen verbessert sind. Das integrierte elastische Kupplungselement muß keine signifikanten Biegemomente durchleiten, da das elastische Kupplungselement in der Achse der Momente durch Lager biegefrei gehalten ist. Dies ermöglicht eine ideale Nachgiebigkeitseigenschaft in axialer Richtung ohne Biegewiderstände mit optimaler Steifigkeit in Rotationsrichtung. Die große axiale Nachgiebigkeit des Gelenkes kann den Wegfall eines sonst üblichen Verschiebegelenkes in der Lenksäule, welches Einbautoleranzen und Straßenanregungen kompensieren muß, begünstigen. Weiter erlaubt die erfindungsgemäße Integration des Ringes ein einfaches Zuführen des flexiblen Ringes in axialer Richtung.

Weitere vorteilhafte Ausgestaltungen der Erfindung sind in den Unteransprüchen und in der folgenden Figurenbeschreibung offenbart. Es zeigen:
- Fig. 1: Einen Längsschnitt eines Kardangelenks,
- Fig. 2: eine Darstellung entlang des Schnittes A aus Figur 1,
- Fig. 3: einen Längsschnitt eines Kardangelenks in einer zweiten Ausführung, und
- Fig. 4: eine Darstellung entlang des Schnittes A aus Figur 3.

In den unterschiedlichen Figuren sind gleiche Teile stets mit demselben Bezugszeichen versehen, so daß diese in der Regel auch nur einmal beschrieben werden.

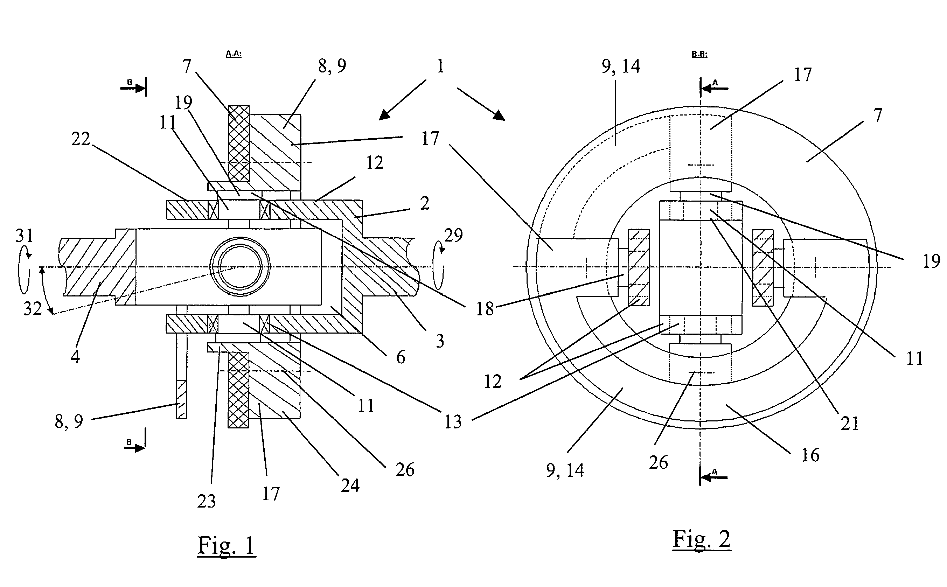

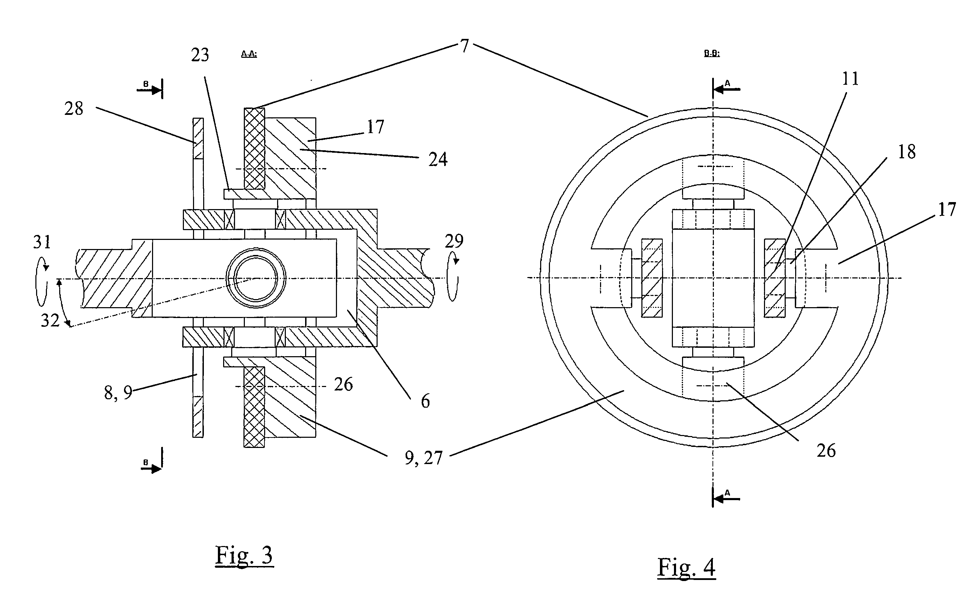

Die Figuren 1 bis 4 zeigen ein Kardangelenk 1, das zwei Gelenkgabeln 2 aufweist. Eine der Gelenkgabeln 2 ist mit einer angetriebenen Welle 3 bzw. Antriebswelle 3 verbunden, wobei die andere Gelenkgabel 2 mit einer anzutreibenden Welle 4 bzw. Abtriebswelle 4 verbunden ist. Die beiden Gelenkgabeln 2 sind um 90° radial verdreht zueinander angeordnet, so daß die beiden Gelenkgabeln 2 einen Innenraum 6 bilden. Dem Kardangelenk 1 ist ein elastisches Kupplungselement 7 zugeordnet. Den Gelenkgabeln 2 ist ein Halteelementenpaar 8 zugeordnet, das aus zwei einander identischen, räumlich getrennten Halteelementen 9 gebildet ist, die um 90° radial verdreht zueinander angeordnet sind. Die Halteelemente 9 sind mit ihren jeweils daran angeordneten Zapfen 11 in den jeweils zugeordneten Gelenkgabeln 2 bzw. in deren Gabelschenkeln 12 in Lagern 13 drehbar gelagert. Die Halteelemente 9 sind über das elastische Kupplungselement 7 miteinander verbunden. Aufgrund der gewählten Seitenansicht ist in den Figuren 1 und 3 jeweils nur eine Gelenkgabel 2 mit ihren beiden Gabelschenkeln 12 vollständig erkennbar.

In den dargestellten Ausführungsbeispielen nach den Figuren 1 und 3 ist die jeweilige Welle 3 bzw. 4 einstückig mit den Gelenkgabeln 2 hergestellt. Selbstverständlich können die Gelenkgabeln 2 auch als separate Bauteile mit geeigneten Verbindungsmethoden mit den jeweiligen Wellen 3 bzw. 4 verbunden bzw. an diesen gelagert werden.

Die Lager 13 in den Gabelschenkeln 12 sind als einreihige Lager mit einer radial ausgerichteten Drehachse z.B. als Wälzlager beispielsweise Nadel- oder Kugellager ausgeführt, können aber auch als Gleitlager ausgeführt sein. Zumindest eines der beiden Lager 13 pro Gelenkgabel 2 kann zusätzlich zu den axialen Gelenkkräften noch radiale Gelenkkräfte aufnehmen. Die Lager 13 werden geeignet radial zu einer Gelenkachse in den Gelenkgabeln 2 bzw. deren Gabelschenkeln 12 fixiert. Mögliche Ausführungsformen sind zum Beispiel Preßpassung, Klebung oder Formschluß (Schulteranlage, Springring oder dergleichen) der Lageraußenringe in den Gelenkgabeln 2 bzw. deren Gabelschenkeln 12.

In den Figuren 1 und 2 sind die Halteelemente 9 als Ringklammern 14 ausgestaltet. Da beide Ringklammern 14 identisch ausgestaltet sind, wird nachfolgend lediglich eine beschrieben.

Die Ringklammer 14 weist einen halbkreisförmigen Basishalbring 16 und endseitig an diesem angeordnete Befestigungsbereiche 17 auf, die in Zapfenabschnitte 18 übergehen. Die Zapfenabschnitte 18 tragen jeweils den Zapfen 11.

In dem in den Figuren 1 und 2 dargestellten Ausführungsbeispiel greifen die Zapfen 11 bezogen auf eine Gelenkmittelachse 19 jeweils gegensinnig in die zugeordneten Gabelschenkeln 12 bzw. in die darin aufgenommenen Lager 13 ein. Die Zapfen 11 sind mit ihrem freien Ende 21 von einer dem Innenraum 6 gegenüberliegenden Außenseite 22 zum Innenraum 6 orientiert. Der Zapfenabschnitt 18 und somit der Zapfen 11 ist bezogen auf die Gelenkmittelachse 19 außenseitig an den Gelenkgabeln 2 bzw. deren Gabelschenkeln 12 angeordnet, wobei der Zapfenabschnitt 18 an einer zur Außenseite 22 weisenden Seite der Lager 13 anliegt. Die Ringklammern 14 sind in der Seitenansicht gesehen daher etwas größer als die Gelenkgabeln 2, um diese mit ihrem jeweiligen Zapfenabschnitt 18 zu umgreifen, so daß der Zapfen 11 von der Außenseite 22 in die Lager 13 eingreifen kann.

Der jeweilige Befestigungsbereich 17 ist in der Seitenansicht gesehen (Figur 1) L-förmig mit einem Quersteg 23 und einen daran angeordneten Basissteg 24 ausgestaltet. Der Basissteg 24 ist in Figur 1 etwas dicker ausgeführt als der Quersteg 23.

Der Basissteg 24 erstreckt sich wie in Figur 1 erkennbar senkrecht von der Gelenkmittelachse 19 weggerichtet radial nach außen. An der zur Außenseite 22 orientierten Seite des Querstegs 23 ist jeweils der Zapfenabschnitt 18 mit seinem Zapfen 11 angeordnet. Die beiden Haltelemente 9 bzw. Ringklammern 14 weisen einen einzigen Kreuzungsbereich auf, wobei die Haltelemente 9 bzw. die Ringklammern 14 räumlich voneinander beabstandet sind. Durch vorhandenen axialen Zwischenraum der beiden Ringklammern 14 wird eine axiale Nachgiebigkeit gemäß der axialen Steifigkeit des Kupplungselementes 7 zur Verfügung gestellt. Zusätzlich erlaubt der axiale Zwischenraum eine Inklination 32 bzw. Winkelverschränkung.

Das elastische Kupplungselement 7 ist in dem in den Figuren 1 und 2 dargestellten Ausführungsbeispiel als Ring, bzw. Kreisring runder, vieleckiger oder polygonaler Ausprägung, bevorzugt als torsionssteifer, biege -elastischer bzw. axial elastischer Ring ausgestaltet und mit den Befestigungsbereichen 17 bzw. den Basisstegen 24 verbunden. Das elastische Kupplungselement 7 ist wie die Ringklammern 14 um die Außenseite 22 der jeweiligen Gelenkgabel 2 bzw. deren Gabelschenkel 12 geführt.

Das elastische Kupplungselement 7 besteht zum Beispiel aus einem Gummi. Als Verbindung mit dem jeweiligen Halteelement 9 kann beispielsweise eine Schraubverbindung, Nietverbindung, Vulkanisierung oder dergleichen vorgesehen sein. Die Verbindung ist in den Figuren 1 und 2 prinzipiell mittels einer strichpunktierten Linie 26 dargestellt, wobei in Figur 1 bzw. in Figur 3 aufgrund der gewählten Darstellung lediglich eine Verbindung von einem Halteelement 9 des Halteelementenpaares 8 mit dem elastischen Kupplungselement 7 erkennbar ist. Das elastische Kupplungselement 7 steht in radialer Richtung gesehen etwas über den Basissteg 24 über, kann aber auch bündig mit diesem abschließen oder in Radialrichtung gesehen etwas kleiner ausgestaltet sein.

Eine weitere Ausgestaltung des erfindungsgemäßen Kardangelenks 1 ist in den Figuren 3 und 4 dargestellt. Wie zu dem in den Figuren 1 und 2 beschriebenem Ausführungsbeispiel greifen die Zapfen 11 bezogen auf die Gelenkmittelachse 19 gegensinnig in die Lager 13 ein, wobei die Gelenkmittelachse 19 in den Figuren 3 und 4 auch gleichzeitig eine Symmetrieachse darstellt.

Die Halteelemente 9 sind bei diesem Ausführungsbeispiel als Tragring 27 ausgestaltet. Die Tragringe 27 weisen im Unterschied zu dem Ausführungsbeispiel nach den Figuren 1 und 2 einen vollkreisförmigen Basisring 28 auf, der wie zuvor um die Außenseiten 22 der Gelenkgabeln 2 bzw. deren Gabelschenkel 12 geführt ist, wobei dem Tragring 27 ebenfalls zwei Befestigungsbereiche 17 zugeordnet si nd. Die Befestigungsbereiche 17 sind wie zuvor beschrieben L-förmig mit dem Quersteg 23 und dem an diesem angeordneten Basissteg 24 ausgestaltet. Dem jeweiligen Quersteg 23 ist wiederum jeweils ein Zapfenabschnitt 19 zugeordnet, die jeweils den Zapfen 11 tragen. Die Zapfenabschnitte 19 des jeweiligen Tragrings 27 sind wie die Befestigungsbereiche 17 einander direkt gegenüberliegend angeordnet, so daß die Zapfen 11 mit ihrem freien Ende 21 zueinander weisend zu orientiert sind.

Bei den Ausführungsbeispielen nach den Figuren 1 bis 4 sind die jeweiligen Halteelemente 9 im Längsschnitt bzw. in der Seitensicht gesehen mit ihrer Mittelachse axial versetzt angeordnet. Die jeweiligen Halteelemente 9 können mit ihrer Mittelachse aber auch kongruent angeordnet sein. Durch eine kongruente Anordnung der Mittelachsen kann der axiale Bauraumbedarf des Kardangelenks weiter minimiert werden. Die Ausführung als halbkreisförmiges Halteelement 9 wie ausgeführt als Ringklammer 14 in den Figuren 1 und 2 bietet den Vorteil der einfachen radialen Wartung (des Austauschens des Halteelementes 9) ohne Gelenkausbau bzw. dem Trennen des Gelenkes 1 von den Wellen 3 bzw. 4. Dieser Vorteil läßt sich auch bei einer möglichen Ausführung des axial versetzten Tragrings 27 nicht wie in den Figuren 3 und 4 dargestellt als geschlossener Ring, sondern als halbkreisförmiges axial abgesetztes Halteelement 9 nutzen.

Ansonsten entspricht das Ausführungsbeispiel nach den Figuren 3 und 4 dem Ausführungsbeispiel nach den Figuren 1 und 2.

In dem Kardangelenk 1 nach den Ausführungsbeispielen der Figuren 1 bis 4 wird ein Eingangsmoment (Drehrichtung 29) über die angetriebene Welle 3 (Antriebswelle) über die Gelenkgabel 2 auf das in ihr drehbar gelagerte Halteelementenpaar 8 bzw. die jeweils in den gegenüberliegenden Gabelschenkeln 12 gelagerten Halteelemente 9,14,27 und von dort auf das elastische Kupplungselement 7 als Zug-/Druckspannung an die jeweils kreuzenden Halteelemente 9,14,27 und dann weiter auf die Gelenkgabel 2 der anzutreibenden Welle 4 bzw. Abtriebswelle übertragen. Dies ist mittels des zum Eingangsmoment (Drehrichtung 29) gleichsinnigen Ausgangsmoments (Drehrichtung 31) dargestellt. Das elastische Kupplungselement 7 ist hinsichtlich der geringfügig erforderlichen Biegesteifigkeit derart gewählt, daß sichergestellt wird, daß eine Drehung des Halteelementes 9,14,27 bzw. dessen Zapfens 11 bei Neigung (Inklination 32) und Rotation der Gelenkgabel 2 stattfinden kann, um ein Reibungsmoment gemäß der gewählten Lagerluft in den Lagern 13 zu überwinden. In axialer Richtung erlaubt das elastische Kupplungselement 7 so eine Nachgiebigkeit, die zur Isolation genutzt werden kann, während die Kontur des elastischen Kupplungselementes 7 eine hohe Drehsteifigkeit bereitstellt.

Vorteilhafter Weise kann das Kardangelenk 1 bei einer Ausgestaltung nach den Figuren 1 bis 4 mit einem als Ring ausgestalteten elastischen Kupplungselement 7 kleiner ausgeführt werden als zum Beispiel mit einer im Innenraum 6 angeordneten Scheibe bzw. mit einem dort liegenden Kreisring, so daß eine axiale Flexibilität bei gleicher Rotationssteifigkeit im Vergleich zu einem innen liegenden flexiblen Kupplungselement vergrößert werden kann.

Das in den Figuren 1 bis 4 dargestellte Kardangelenk 1 eignet sich insbesondere zur Verwendung in einer Lenksäule eines Kraftfahrzeuges. Die Wellen 3 bzw. 4 sind zueinander gefluchtet dargestellt. Im Fahrzeug liegt üblicherweise eine zueinander abgewinkelte Position vor, wobei das Kardangelenk die Drehübertragung aufrechterhält. Die abgewinkelte Position ist in den Figuren 1 und 3 mittels des Inklinationswinkels 32 dargestellt.

## Patentansprüche

1. Kardangelenk, das zwei Gelenkgabeln (2) aufweist, wobei eine der Gelenkgabeln (2) mit einer angetriebenen Welle (3) bzw. Antriebswelle und die andere Gelenkgabel (2) mit einer anzutreibenden Welle (4) bzw. Abtriebswelle verbindbar bzw. verbunden ist, und wobei die beiden Gelenkgabeln (2) um 90° radial verdreht zueinander angeordnet sind, so daß die beiden Gelenkgabeln (2) einen Innenraum (6) bilden, und wobei dem Kardangelenk (1) ein elastisches Kupplungselement (7) zugeordnet ist,
**dadurch gekennzeichnet, daß**
den Gelenkgabeln (2) ein diese umgreifendes Halteelementenpaar (8) zugeordnet ist, das aus zwei einander identischen Halteelementen (9,14,27) gebildet ist, die um 90° radial verdreht zueinander angeordnet sind, wobei die Halteelemente (9,14,27) Befestigungsbereiche (17) aufweisen, die L-förmig mit einem Quersteg (23) und einem daran angeordneten Basissteg (24) ausgestaltet sind, an dem ein Zapfenabschnitt (18) angeordnet ist, der jeweils einen Zapfen (11) trägt, wobei das elastische Kupplungselement (7) mit dem Basissteg (24) verbindbar ist, und wobei die Halteelemente (9,14,27) bezogen auf eine Gelenkmittelachse (19) außenseitig angeordnet sind und mit ihren jeweils daran angeordneten Zapfen (11) in den jeweils zugeordneten Gelenkgabeln (2) bzw. Gabelschenkeln (12) in Lagern (13) drehbar gelagert sind, die in den Gabelschenkeln (12) aufgenommen sind, wobei die Zapfen (11) bezogen auf eine Gelenkmittelachse (19) jeweils von einer Außenseite (22) gegensinnig in die zugeordneten Gabelschenkel (12) bzw. in die darin aufgenommenen Lager (13) eingreifen, wobei die Lager (13) eine Drehachse für die Halteelemente (9,14,27) bilden.

2. Kardangelenk nach Anspruch 1,
**dadurch gekennzeichnet, daß**
die Zapfen (11) mit ihrem freien Ende (21) von der zum Innenraum (6) gegenüberliegenden Außenseite (22) der Gabelschenkel (12) zum Innenraum (6) orientiert in die Gabelschenkel (12) bzw. in die darin angeordneten Lager (13) eingreifen.

3. Kardangelenk nach Anspruch 1 oder 2,
**dadurch gekennzeichnet, daß**
das elastische Kupplungselement (7) als torsionssteifer, biege-elastischer bzw. axial elastischer Ring ausgeführt ist, der um Außenseiten (22) der Gelenkgabeln (2) bzw. deren Gabelschenkel (12) geführt ist.

4. Kardangelenk nach einem der vorhergehenden Ansprüche,
**dadurch gekennzeichnet, daß**
die Halteelemente (9,14,27) zumindest einen Kreuzungsbereich aufweisen, wobei die Kreuzungsbereiche eine Freigängigkeit aufweisen, so daß die Halteelemente (9,14,27) in dem zumindest einen Kreuzungsbereich räumlich zueinander beabstandet sind.

5. Kardangelenk nach einem der vorhergehenden Ansprüche,
**dadurch gekennzeichnet, daß**
die Halteelemente (9,14) als Ringklammern (14) ausgestaltet sind, die einen einzigen Kreuzungsbereich aufweisen.

6. Kardangelenk nach Anspruch 5,
**dadurch gekennzeichnet, daß**
die Ringklammer (14) einen halbkreisförmigen Basishalbring (16) aufweist, an dem die Befestigungsbereiche (17) endseitig angeordnet sind.

7. Kardangelenk nach einem der Ansprüche 1 bis 4,
**dadurch gekennzeichnet, daß**
die Halteelemente (9,27) als Tragring (27) ausgestaltet sind, die zwei Kreuzungsbereiche aufweisen.

8. Kardangelenk nach Anspruch 7,
**dadurch gekennzeichnet, daß**
der Tragring (27) einen vollkreisförmigen Basisring (28) aufweist, an dem die Befestigungsbereiche (17) angeordnet sind.

## Claims

1. Cardanic joint which has two joint forks (2), wherein one of the joint forks (2) can be connected or is connected to a driven shaft (3) or drive shaft and the other joint fork (2) can be connected or is connected to a shaft (4) which is to be driven or output shaft, the two joint forks (2) being arranged so as to be rotated radially by 90° with respect to one another, with the result that the two joint forks (2) form an inner space (6), and the cardanic joint (1) being assigned an elastic coupling element (7), **characterized in that** the joint forks (2) are assigned a holding-element pair (8) which engages around the former and is formed from two identical holding elements (9, 14, 27) which are arranged so as to be rotated radially by 90° with respect to one another, the holding elements (9, 14, 27) having fastening regions (17) which are configured in an L-shaped manner with a transverse web (23) and a base web (24) which is arranged on the latter and on which a journal section (18) is arranged which carries in each case one journal (11), it being possible for the elastic coupling element (7) to be connected to the base web (24), and the holding elements (9, 14, 27) being arranged on the outside in relation to a joint centre axis (19) and being mounted rotatably by way of their journals (11) which are arranged in each case thereon in the respectively assigned joint forks (2) or fork limbs (12) in bearings (13) which are received in the fork limbs (12), the journals (11) engaging in each case from an outer side (22), in relation to a joint centre axis (19), in opposite directions into the associated fork limbs (12) or into the bearings (13) which are received in the latter, the bearings (13) forming a rotational axis for the holding elements (9, 14, 27).

2. Cardanic joint according to Claim 1, **characterized in that** the journals (11) engage by way of their free end (21) into the fork limbs (12) or into the bearings (13) which are arranged in the latter, in a manner which is oriented from that outer side (22) of the fork limbs (12) which lies opposite the inner space (6) towards the inner space (6).

3. Cardanic joint according to Claim 1 or 2, **characterized in that** the elastic coupling element (7) is configured as a torsionally rigid, flexurally elastic or axially elastic ring which is guided around outer sides (22) of the joint forks (2) or their fork limbs (12).

4. Cardanic joint according to one of the preceding claims, **characterized in that** the holding elements (9, 14, 27) have at least one crossover region, the crossover regions having a freedom of movement, with the result that the holding elements (9, 14, 27) are spaced apart from one another spatially in the at least one crossover region.

5. Cardanic joint according to one of the preceding claims, **characterized in that** the holding elements (9, 14) are configured as annular clips (14) which have a single crossover region.

6. Cardanic joint according to Claim 5, **characterized in that** the annular clip (14) has a semicircular base half-ring (16), on which the fastening regions (17) are arranged on the end side.

7. Cardanic joint according to one of Claims 1 to 4, **characterized in that** the holding elements (9, 27) are configured as carrying rings (27) which have two crossover regions.

8. Cardanic joint according to Claim 7, **characterized in that** the carrying ring (27) has a completely circular base ring (28), on which the fastening regions (17) are arranged.

## Revendications

1. Joint à croisillon, présentant deux fourchettes de joint (2), l'une des fourchettes de joint (2) pouvant être connectée ou étant connectée à un arbre entraîné (3) ou un arbre d'entraînement et l'autre fourchette de joint (2) pouvant être connectée ou étant connectée à un arbre à entraîner (4) ou un arbre de sortie, et les deux fourchettes de joint (2) étant disposées de manière tournée radialement de 90° l'une par rapport à l'autre, de sorte que les deux fourchettes de joint (2) forment un espace interne (6), et un élément d'accouplement élastique (7) étant associé au joint universel (1),
**caractérisé en ce que**
l'on associe aux fourchettes de joint (2) une paire d'éléments de retenue (8) venant en prise autour de celles-ci, qui est formée de deux éléments de retenue (9, 14, 27) identiques l'un à l'autre, qui sont tournés radialement de 90° l'un par rapport à l'autre, les éléments de retenue (9, 14, 27) présentant des régions de fixation (17) qui sont configurées en forme de L avec une partie transversale (23) et une partie de base (24) disposée contre celle-ci, sur laquelle est disposée une portion de tourillon (18), qui porte à chaque fois un tourillon (11), l'élément d'accouplement élastique (7) pouvant être connecté à la partie de base (24) et les éléments de retenue (9, 14, 27) étant disposés du côté extérieur par rapport à un axe médian du joint (19) et étant montés avec leurs tourillons (11) respectifs disposés sur eux dans les fourchettes de joint (2) ou les branches de fourchettes (12) respectivement associées, de manière à pouvoir tourner dans des paliers (13) qui sont reçus dans les branches de fourchette (12), les tourillons (11) venant en prise par rapport à un axe médian du joint (19) à chaque fois depuis un côté extérieur (22) en sens inverse dans les branches de fourchette associées (12) ou dans les paliers (13) reçus dans celles-ci, les paliers (13) formant un axe de rotation pour les éléments de retenue (9, 14, 27).

2. Joint à croisillon selon la revendication 1,
**caractérisé en ce que**
les tourillons (11) viennent en prise avec leur extrémité libre (21) orientée depuis le côté extérieur (22) des branches de fourchette (12) opposé à l'espace interne (6) vers l'espace interne (6), dans les branches de fourchette (12) ou dans les paliers (13) disposés dedans.

3. Joint à croisillon selon la revendication 1 ou 2,
**caractérisé en ce que**
l'élément d'accouplement élastique (7) est réalisé sous forme de bague rigide en torsion, flexible élastiquement ou axialement élastique, qui est guidée autour des côtés extérieurs (22) des fourchettes de joint (2) ou de leurs branches de fourchettes (12).

4. Joint à croisillon selon l'une quelconque des revendications précédentes, **caractérisé en ce que**
les éléments de retenue (9, 14, 27) présentent au moins une région de croisement, les régions de croisement présentant un libre mouvement de sorte que les éléments de retenue (9, 14, 27) soient espacés spatialement les uns des autres dans l'au moins une région de croisement.

5. Joint à croisillon selon l'une quelconque des revendications précédentes, **caractérisé en ce que**
les éléments de retenue (9, 14) sont configurés sous forme de pinces annulaires (14), qui présentent une région de croisement unique.

6. Joint à croisillon selon la revendication 5,
**caractérisé en ce que**
la pince annulaire (14) présente une demi-bague de base de forme semi-circulaire (16), sur laquelle sont disposées, du côté de l'extrémité, les régions de fixation (17).

7. Joint à croisillon selon l'une quelconque des revendications 1 à 4,
**caractérisé en ce que** les éléments de retenue (9, 27) sont configurés sous forme de bague porteuse (27) qui présentent deux régions de croisement.

8. Joint à croisillon selon la revendication 7,
**caractérisé en ce que**
la bague porteuse (27) présente une bague de base (28) en forme de cercle complet, sur laquelle sont disposées les régions de fixation (17).
